Europäisches Patentamt

European Patent Office

Office européen des brevets

(11) Veröffentlichungsnummer: **0 388 912**

**A2**

## (12) EUROPÄISCHE PATENTANMELDUNG

(21) Anmeldenummer: **90105317.3**

(22) Anmeldetag: **21.03.90**

(51) Int. Cl.5: **A22C 13/00**

(30) Priorität: **23.03.89 DE 3909661**

(43) Veröffentlichungstag der Anmeldung:
**26.09.90 Patentblatt 90/39**

(84) Benannte Vertragsstaaten:
**AT BE CH DE DK ES FR GB GR IT LI LU NL SE**

(71) Anmelder: **VEMAG Maschinenbau GmbH**
**Weserstrasse 32**
**D-2810 Verden (Aller)(DE)**

(72) Erfinder: **Seidler, Dieter, Prof.Dr.med.vet.**
**Lamberg 34**
**D-4920 Lemgo(DE)**
Erfinder: **Klemp, Andreas, Dipl.-Ing.**
**Bundesstrasse 38**
**D-2090 Winsen/Luhe(DE)**

(74) Vertreter: **Eisenführ, Speiser & Strasse**
**Martinistrasse 24**
**D-2800 Bremen 1(DE)**

(54) **Naturdarm als Hülle für Wurstwaren sowie Verfahren und Vorrichtung zu dessen Herstellung.**

(57) Ein Naturdarm ist aus einzelnen Darmabschnitten (34,36) zusammengeestzt, die sich in einem Überlappungsbereich konzentrisch überlappen. Vorab werden die Darmabschnitte mit einer Genußsäure, beispielsweise Milchsäure, behandelt, so daß der Collagen-Anteil aufquillt und die Elastizität und Haftfähigkeit erhöht wird. Nach dem Zusammenschieben der Darmenden wird der zusammengesetzte Naturdarm getrocknet.

Die Erfindung betrifft einen Naturdarm als Hülle für die Herstellung von Wurstwaren.

Naturdärme weisen gegenüber den verfügbaren Kunstdärmen nach wie vor erhebliche Vorteile auf. Sie stellen ein natürliches Produkt dar, das der einzelnen Wurst ein individuelles Aussehen verleiht. Die natürliche Elastizität der Bindegewebsstruktur erlaubt eine Anpassung an die Veränderungen der Inhaltsstoffe aufgrund natürlicher Verdunstung und sonstiger Veränderungen. Das natürliche Eiweiß der Gewebsbestandteile im Naturdarm weist nahezu die selbe chemische Struktur wie die Fleisch- und Fettbestandteile der Füllung auf, so daß der Darm und die Füllung eine enge Verbindung eingehen. Die Fähigkeit der Gewebsschichten, Diffusion und Stoffaufnahme zu ermöglichen, ist von besonderem Vorteil bei der Aufnahmefähigkeit für das Raucharoma. Naturdarm ist im übrigen vollständig verdaulich.

Andererseits kann bei der industriellen Herstellung von Wurstwaren mit Hilfe von schnell laufenden Füllmaschinen die Verwendung von Naturdarm Schwierigkeiten hervorrufen, die bei Kunstdarm nicht auftreten. Es ist zwar in den letzten Jahren gelungen, Naturdärme durch Kalibrieren und Konfektionieren in bezug auf ihre Abmessungen und Materialeigenschaften weitgehend zu standardisieren, jedoch besteht ein bisher nicht überwundener Nachteil darin, daß Naturdärme bei Schaf, Rind, Schwein und anderen Tieren nur in Abschnitten begrenzter Länge gewonnen werden können und bisher keine Möglichkeit besteht, Naturdärme zu einem stabilen Endlosprodukt zu verbinden. Dies bedeutet einen verhältnismäßig hohen Verschnitt aufgrund der am Ende der jeweiligen Darmabschnitte verbleibenden Reste sowie die Notwendigkeit, nach Durchlauf jedes Darmabschnitts neu mit dem Füllvorgang zu beginnen, so daß eine kontinuierliche Arbeitsweise nicht erreicht werden kann.

Die bisher angestellten Überlegungen zur Verbindung von Darmmaterial haben noch nicht zu einem befriedigenden Ergebnis geführt. Es ist bekannt, Wursthüllen für übergroße Sonderformate aus einzelnen Darmabschnitten zusammenzunähen (DE-OS 3430 079), jedoch bilden sich durch den Nadeleinstich Löcher, die sich anschließend nicht wieder schließen, so daß das Zusammennähen von Darmabschnitten zumindest für Brüh- oder Kochwürste oder dergleichen nicht in Frage kommt. In der DE-PS 21 11 878 wird daher vorgeschlagen, überstehende Nahtteile mit einem Kunststoffband oder einem Streifen aus Naturdarm zu vernähen oder die überstehenden Darmstreifen anschließend gegenzunähen, so daß ein Sicherungsstreifen entsteht der beim Füllen gegen die erste Naht gepreßt wird und diese dadurch abdichtet. Dieses Verfahren ist außerordentlich aufwendig und beim End-zu-End-Vernähen von Därmen grundsätzlich nicht anwendbar.

Bei einem anderen bekannten Verfahren gemäß der DE-OS 32 16 340 wird in eine Naturdarmhülle ein kalibrierter Kunstdarm aus genießbarem Gewebe eingezogen. Auf diese Weise läßt sich naturgemäß nicht ein "Naturprodukt" im zuvor geschilderten Sinne herstellen.

Die US-PS 2,977,233 beschreibt ein Verfahren zur Herstellung einer sackförmigen, an einem Ende geschlossenen Wursthülle aus Därmen oder Darmteilen schlechter Qualität. Auf einen Dorn, der an einem Ende abgerundet ist, wird zunächst ein Darm oder Darmabschnitt aufgeschoben. Ist der Darmabschnitt kürzer als Dorn, so wird ein weiterer Darmabschnitt auf den Dorn und den ersten Darmabschnitt aufgeschoben, bis er den ersten Darmabschnitt geringfügig über eine Länge von 1cm bis 2 cm überlappt. Dies wird ggfs. mehrfach wiederholt bis zu einem letzten Darmabschnitt, der das abgerundete Ende des Dorns überragt. Das überstehende Ende wird zur Bildung eines knotenförmigen Verschlusses abgedreht, und das verbleibende freie Ende wird sodann umgestülpt und als zweite Lage über den Dorn und die dort befindlichen Darmabschnitte gezogen, so daß insgesamt eine doppellagige Struktur entsteht. Wie erwähnt, soll das Verfahren anwendbar sein für Därme geringer Qualität, die nicht einlagig als Wursthülle verwendet werden können und daher zur Abdeckung von Fehlstellen doppellagig übereinandergezogen werden.

Der Erfindung liegt die Aufgabe zugrunde, einen Naturdarm sowie ein Verfahren und eine Vorrichtung zu seiner Herstellung zu schaffen, der zur Verwendung in Verbindung mit kontinuierlich arbeitenden Füllmaschinen geeignet ist.

Diese Aufgabe wird erfindungsgemäß dadurch gelöst, daß der Naturdarm ein aus einzelnen Darmabschnitten zusammengesetzter Endlosdarm ist, dessen Abschnitte im Überlappungsbereich konzentrisch übereinandergeschoben und zusammengetrocknet sind.

Beim Füllen eines derartigen Naturdarms kommt es durch die Feuchtigkeit der Wurstmasse zu einer Rehydratation des Darmmaterials, durch die die gewünschten Qualitäten eines Naturdarms, insbesondere die Elastizität und die Eignung für den Verzehr, wiederhergestellt werden.

Der Überlappungsbereich entspricht wenigstens der Länge einer herzustellenden Wurst. Auf diese Weise wird sichergestellt, daß beim Füllvorgang stets innerhalb der Überlappungsbereiche "abgedreht" wird, der Darm also zur Trennung von zwei aufeinander folgenden Würsten geschlossen wird. Auf diese Weise kann sich die Verbindungsstelle im weiteren Verlauf auch dann nicht lösen, wenn die Haftung im Hinblick auf den Füllvorgang und die weitere Behandlung, etwa ein Kochvorgang oder Erhitzungsvorgang, nicht ausreichen sollte.

Vorzugsweise sind die Darmabschnitte sogenannte Saitlinge verschiedener Tierarten, insbesondere vom Schaf oder Schwein, also ein Naaaaturdarm, der durch eine bekannte Vorbehandlungvon allen übrigen Bestandteilen, ausgenommen die Bindegewebslage des Darms, befreit werden.

Bei Durchführung des erfindungsgemäßen Verfahrens können frisch gewonnene oder auch konservierte Därme verwendet werden. Im Falle gesalzener Därme werden diese vor der weiteren Verarbeitung gewässert.

Das dadurch entstehende Ausgangsmaterial wird zunächst in verdünnter Genußsäure, etwa Milchsäure, Essigsäure, Zitronensäure, Weinsäure, Apfelsäure, vorbehandelt, so daß der Collagen-Anteil aufquillt und die Elastizität sowie Haftfähigkeit verbessert wird. Anschließend werden die einzelnen Darmabschnitte in Überlappungsbereichen konzentrisch übereinandergeschoben und sodann durch Zusammentrocknen verbunden. Aus der Trockungsstation wird der auf diese Weise gebildete Endlosdarm weiterbewegt und schließlich auf einem Dorn gerafft, also faltenförmig zusammengeschoben.

Die Behandlung mit einer Genußsäure wird vorzugweise mit 3 %iger Milchsäure während eines Zeitraums von 5 Minuten durchgeführt. Andere Säuren, Konzentrationen und Zeiten sind jedoch möglich. Eine anschließende Imprägnierung mit Glyzerin, Sorbit oder anderen Weichmachern kann zur Verbesserung des Füllvermögens und der Handhabung beitragen. In Betracht kommen beispielsweise eine 10minütige Behandlung mit 10 %iger Milchsäure und anschließender Glyzerin-Imprägnierung.

Eine erfindungsgemäße Vorrichtung umfaßt vorzugsweise einen zylindrischen Dorn, der sich in einer Stufe konisch erweitert und auf den zunächst einer der Darmabschnitte so weit aufgeschoben wird, daß das rückwärtige Ende des Darmabschnitts auf dem Abschnitt geringeren Duchmessers des Dorns liegt. Dieser Abschnitt des Dorns kann beispielsweise ein mit Saugbohrungen versehenes Rohr sein, durch das das Ende des Darmabschnitts festgehalten wird. Anschließend wird der Anfang des nachfolgenden Darmabschnitts auf den Abschnitt geringeren Durchmessers des Dorns entsprechend der gewünschten Überlappungslänge auf das Ende des ersten Darmabschnitts aufgeschoben. Die nunmehr einander überlappenden Darmenden werden bis in die angrenzende Trockenstation vorgerückt, in der eine Lufttrocknung mit weniger als 50 °C erfolgt.

Der weitere Abschnitt des Dorns, der sich innerhalb der Trockungsstation befindet, besteht aus Segmenten, die eine Veränderung des Durchmessers entsprechend dem Durchmesser des Darms ermöglichen können. Da der Darm dazu neigt, beim Trocknen an dem Dorn anzukleben, weisen die Segmente vorzugsweise endlose, parallel zur Längsachse gerichtete Laufbänder auf, die ein Abschälen des Darms beim Abziehen aus der Trokkungsstation ermöglichen. Anschließend wird der getrocknete, endlose Naturdarm auf einen Träger gezogen und gerafft, also faltenförmig zusammengeschoben.

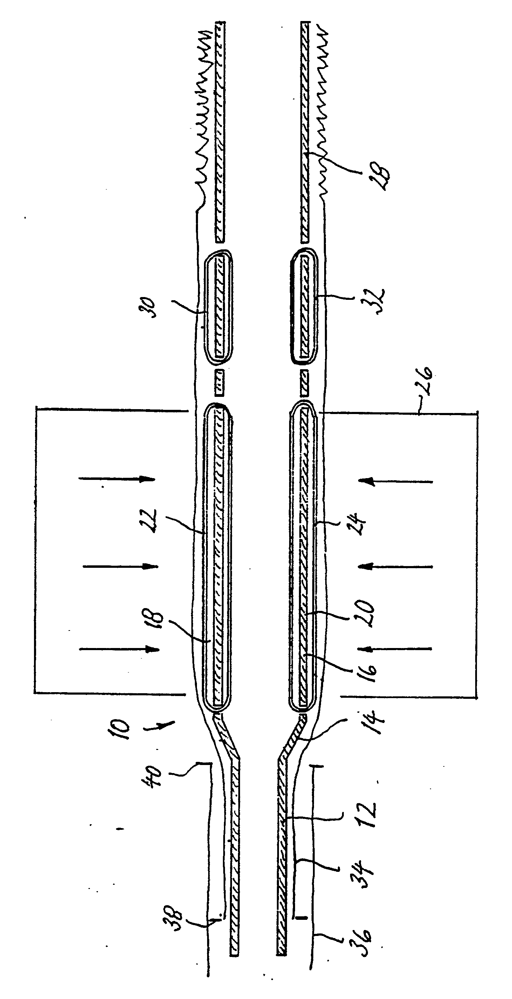

Im folgenden wird ein bevorzugtes Ausführungsbeispiel der erfindungsgemäßen Vorrichtung anhand der beigefügten Zeichnung näher erläutert.

Die einzige Figur zeigt die funktionell wesentlichen Teile einer erfindungsgemäßen Vorrichtung in einem schematischen Schnitt.

Ein Dorn 10 weist die Form eines Zylinders mit kreisförmigem oder annähernd kreisförmigem (polygonalem) Querschnitt auf. Er umfaßt einen ersten Abschnitt 12 geringeren Durchmessers, der in einer konischen Stufe 14 in einen Abschnitt 16 größeren Durchmessers übergeht. Der Dorn 10 besteht aus einzelnen Segmenten 18,20, die sektorförmig zusammengesetzt sind und einen annähernd runden Querschnitt ergeben. Es sind mindestens drei Segmente vorgesehen, jedoch ergibt eine größere Anzahl von Segmenten eine bessere Annäherung an die zylindrische Darmform. Die Segmente ermöglichen eine Anpassung an den Querschnitt des Ausgangsmaterials und zudem auch eine Dehnung oder auch Schrumpfung des Darms zur Erzielung gewünschter Querschnitte durch radiale Verstellung der Segmente.

In die Segmente 18,20 sind im Abschnitt 16 größeren Durchmessers endlose Laufbänder 22,24 integriert, die es ermöglichen, den zusammengesetzten Naturdarm, der nach dem Trocknen zum Anhaften an dem Dorn neigt, ohne Zerstörung schonend nach rechts in der Zeichnung abzuziehen. Die Laufbänder 22,24 können einen nicht gezeigten Antrieb aufweisen oder auch freilaufende Bänder sein, sofern der Darm auf andere Weise nach rechts abgezogen werden kann.

Der Dorn-Abschnitt 16 größeren Durchmessers befindet sich in einem Trocknungstunnel 26, in dem die Darmabschnitte nach dem Verbinden schonend und unter Verwendung von Luft mit einer Temperatur von weniger als 50 °C getrocknet werden.

Anschließend an die Trocknung wird der verbundene Naturdarm auf einen im Durchmesser dem Abschnitt 16 des Dorns 10 angepaßten Träger 28 vorgeschoben und auf diesem gerafft. Als Transporthilfe können zwischen dem Trockentunnel 26 und dem Träger 28 weitere Lauf- oder Förderbänder 30,32 in kreisförmiger Anordnung vorgesehen sein.

In der Zeichnung ist zur Erläuterung des Verfahrensablaufs im übrigen ein erster Darmabschnitt 34 und ein zweiter Darmabschnitt 36 angedeutet. Der erste Darmabschnitt 34 wird von links in der Zeichnung so weit auf den Dorn 10 aufgeschoben, daß sein rückwärtiger Endbereich im wesentlichen die Länge des Abschnitts 12 geringeren Durchmessers einnimmt. Zur genauen Positionierung ist eine Lichtschranke 38 oder dergleichen vorgesehen, die das rückwärtige Ende des ersten Darmabschnitts abtastet und den Transport anschließend unterbricht. In dieser Stellung wird das rückwärtige Ende des Darmabschnitts 34 an den Abschnitt 12 des Dorns, der mit nicht gezeigten Saugbohrungen versehen und von der Innenseite her mit einer Unterdruckquelle verbunden ist, angesaugt und damit festgehalten. Anschließend wird der Anfang des nächsten Darmabschnitts 36 über das Ende des ersten Darmabschnitts 34 geschoben, bis die gewünschte Überlappungsstrecke erreicht ist. Durch eine einstellbare Lichtschranke 40 oder dergleichen wird die Länge des Überlappungsbereichs festgelegt. Sodann werden beide Darmabschnitte 34,36 gemeinsam unter Beibehaltung der Überlappung in den Trockentunnel 26 vorgerückt. Der Träger 28 kann ein Einweg-Produkt sein, das den Naturdarm für Transport und Lagerung bis hin zum Einsatz in der Füllmaschine aufnimmt.

**Ansprüche**

1. Naturdarm als Hülle für die Herstellung von Wurstwaren, dadurch **gekennzeichnet**, daß der Naturdarm ein aus einzelnen Darmabschnitten (34,36) zusammengesetzter Endlosdarm ist, dessen Abschnitte im Überlappungsbereich konzentrisch übereinandergeschoben und zusammengetrocknet sind.

2. Naturdarm nach Anspruch 1, dadurch **gekennzeichnet**, daß die Darmabschnitte (34,36) im wesentlichen nur aus Bindegewebe bestehende Saitlinge, z.B. vom Schaf oder Schwein, sind.

3. Naturdarm nach Anspruch 1 oder 2, dadurch **gekennzeichnet**, daß die Länge des Überlappungsbereichs wenigstens der Länge einer herzustellenden Wurst entspricht.

4. Verfahren zur Herstellung eines Naturdarms gemäß einem der Ansprüche 1 bis 3, dadurch **gekennzeichnet**, daß die Darmabschnitte in verdünnter Genußsäure vorbehandelt und anschließend gewässert werden, daß die einzelnen Darmabschnitte sodann in einem Überlappungebereich konzentrisch übereinandergeschoben werden und daß die Darmabschnitte nach dem Zusammenschieben zusammengetrocknet werden.

5. Verfahren nach Anspruch 4, dadurch **gekennzeichnet**, daß die Behandlung mit Genußsäure mit einer 3 %igen Milchsäure über einen Zeitraum von 5 Minuten erfolgt.

6. Verfahren nach Anspruch 4, dadurch **gekennzeichnet**, daß die Behandlung mit einer Genußsäure über 10 Minuten mit einer 10 %igen Milchsäure erfolgt, und daß der Naturdarm anschließend mit Glyzerin imprägniert wird.

7. Verfahren nach einem der Ansprüche 4 bis 6, dadurch **gekennzeichnet**, daß die Darmabschnitte über eine Länge übereinandergeschoben werden, die wenigstens der Länge einer herzustellenden Wurst enspricht.

8. Verfahren nach einem der Ansprüche 4 bis 7, dadurch **gekennzeichnet**, daß die Darmabschnitte beim Trocknen gespannt werden.

9. Verfahren nach einem der Ansprüche 4 bis 8, dadurch **gekennzeichnet**, daß die Trockung der Darmabschnitte mit Luft mit einer Temperatur von weniger als 50° C erfolgt.

10. Vorrichtung zur Durchführung des Verfahrens gemäß einem der Ansprüche 4 bis 9, **gekennzeichnet** durch einen Dorn (10) mit einem ersten Abschnitt (12) geringeren Durchmessers, der über eine konische Stufe (14) in einen zweiten Abschnitt (16) größeren Durchmessers übergeht.

11. Vorrichtung nach Anspruch 10, dadurch **gekennzeichnet**, daß der Abschnitt (16) größeren Durchmessers in einem Trocknungstunnel (26) zur Lufttrockung des Darms angeordnet ist.

12. Vorrichtung nach einem der Ansprüche 10 oder 11, dadurch **gekennzeichnet**, daß der Dorn-Abschnitt (12) geringeren Durchmessers als Hohlzylinder mit Saugbohrungen ausgebildet ist, die von der Innenseite des Dornes her mit einer Unterdruckquelle in Verbindung stehen.

13. Vorrichtung nach einem der Ansprüche 10 bis 12, dadurch **gekennzeichnet**, daß der Dorn (10) aus einzelnen sektorförmigen Segmenten (18,20) zusammengesetzt ist, die in radialer Richtung verstellbar sind.

EP 0 388 912 A2